# EUROPEAN PATENT APPLICATION

(11) **EP 1 450 561 A1**
(43) Date of publication of application: **25.08.2004**
(21) Application number: 03003763.4
(22) Date of filing: 19.02.2003
(51) Int. Cl.: H04N 7/025, H04N 7/088

(54) **Control method and device of video signal combined with interactive control data**

(71) Applicant: Global View Co., Ltd., Tapei, Taiwan (TW)
(72) Inventor: Wang, Jih-Shiun, Ta An District, Tapei, Taiwan (TW); Chou, Chih-Yuan, Tapei, Taiwan (TW)
(74) Representative: Viering, Jentschura & Partner

(57) **Abstract**

A control method and device of a video signal combined with interactive control data are proposed, wherein interactive control data are added into or extracted from a video signal. The adding method adds the interactive control data into the front and rear blocks in the video signal exceeding the image display area. The image display area means a frame in the video signal. The front block means a plurality of image scan lines in front of each frame, and the rear block means a plurality of image scan lines behind each frame. Similarly, the extraction method extracts the interactive control data from the front and rear blocks exceeding the image display area.

## Description

### Field of the invention

The present invention relates to a control method and device of a video signal combined with interactive control data and, more particularly, to a control method and device capable of hiding interactive control data in a common video signal to synchronously transfer interactive control signals for controlling another interactive device when playing the video signal.

### Background of the invention

Due to continual progress of the computer technology, customers are fond of many interactive teaching software, game software or entertaining software, wherein personal computers are required for interactive responses. For video playing media (wired/wireless television stations, video recorders or VCD or DVD players), however, it is still difficult to achieve interactive control.

Currently, because of difficulty in practice, there are few applications making interactive control on video signals. If it is necessary to formulate new formats again, compatibility with common video playing or displaying media will be affected. On the other hand, if interactive control data can be added onto common video signals, many applications can certainly be derived. For instance, when playing educational programs for children, toys in front of the television can be controlled for interactions to accompany children for learning. Moreover, in an interactive English teaching movie, when a teacher teaches an English sentence, a relevant answer will be transferred to a learning tool beside a student so that the student can practice answering to the learning tool. If the answer is wrong, the teacher in the movie will teach repetitively until the student has mastered the sentence, and the teaching tool then controls a movie player to play the next sentence.

Accordingly, in order to conform to existent video signal formats and recording media storage formats and also to generate interactive control responses on common video playing media, the present invention aims to propose a control method and device of a video signal combined with interactive control data so as to completely conform to existent video/audio playing media and recording media.

### Summary of the invention

The primary object of the present invention is to provide a control method of a video signal combined with interactive control data. First, a video signal is read out from a video signal source. The positions where interactive control data are to be added into the video signal are then located (eg., the front and rear blocks in the video signal exceeding the common video display area). The video display area means a frame in the video signal. The front block means a plurality of image scan lines in front of each frame, and the rear block means a plurality of image scan lines behind each frame. Finally, the interactive control data are added into the front and rear blocks exceeding the image display area, and the video-signal combined the interactive control data is converted into an analog video signal and then transferred to a video displaying medium, or the video signal is compressed according to image compression techniques (e.g., MPEG) and then stored into a video recording medium.

The secondary object of the present invention is to provide a control device of a video signal combined with interactive control data. The control device at least comprises a video signal conversion unit, a video database, an interactive control database, a video processing unit, an analog video conversion unit and a video compression unit. The video signal conversion unit is connected to a video signal source, and is used to convert an analog video signal inputted by the video signal source into a digital video signal. The video database is connected to the video signal conversion unit, and is used to store the digital video signal. The interactive control database is used to store a plurality of sets of interactive control data. The video processing unit is connected to the video database and the interactive control database; and is used to extract and locate the positions where the interactive control data are to be added into the digital video signal and then add the interactive control data into the front and rear blocks exceeding the image display area, hence generating a digital video signal mixed with interactive control data. The analog video conversion unit is connected to the video processing unit, and is used to convert the digital video signal having the interactive control data accomplished by the video processing unit into an analog video signal and then send the analog video signal to a video displaying device. The video compression unit is connected to the video processing unit, and is used to compress the digital video signal having the interactive control data accomplished by the video processing unit according to image compression techniques (e.g., MPEG) and then store the compressed digital video signal into a video recording medium.

The present invention also provides an extraction method of a video signal combined with interactive control data. First, a video signal having interactive control data is read out from a video signal source. The video signal is then directly outputted to a video displaying medium. Next, the positions of the interactive control data in the front and rear blocks in the video signal exceeding the image display area are analyzed. The interactive control data are then extracted and stored temporarily. Finally, the interactive control data are verified and encoded and then transferred to an interactive device to induce corresponding interactive responses.

The present invention also provides an extraction device of a video signal combined with interactive control data. The extraction device at least comprises a video signal buffer unit, a video synchronism analysis unit, a timing extraction control unit; a control data extraction unit, a control data buffer unit and a control data transmission unit. The video signal buffer unit is connected to a video signal source and a video displaying medium, and is used to directly output the video signal for display. The video synchronism analysis unit is connected to the video signal buffer unit, and is used to analyze synchronous signals of frames in the video signal and synchronous signals of image scan lines in each frame. The timing extraction control unit is connected to the video synchronism analysis unit, and is used to calculate the analyzed synchronous signals in the video synchronism analysis unit to obtain the positions and timing of the interactive control data and also generate an extraction control signal. The control data extraction unit is connected to the video signal buffer unit and the timing extraction control unit, and is used to extract the interactive control data in the video signal according to the instruction of the extraction control signal. The control data buffer unit is connected to the control data extraction unit, and is used to temporarily store the interactive control data. The control data transmission unit is connected to the control data buffer unit, and is used to verify and encode the interactive control data and then transfer the interactive control data to an interactive device one by one to induce corresponding interactive responses.

The various objects and advantages of the present invention will be more readily understood from the following detailed description when read in conjunction with the appended drawing, in which:

### Brief description of the drawings:

Fig. 1 is an application block diagram of adding interactive control data into a video signal of the present invention;
Fig. 2 is a system block diagram of adding interactive control data into a video signal of the present invention;
Fig. 3 is a flowchart of adding interactive control data into a video signal of the present invention;
Fig. 4 is a system block diagram of extracting interactive control data from a video signal of the present invention; and
Fig. 5 is.a flowchart of extracting interactive control data from a video signal of the present invention.

### Detailed description of the preferred embodiments

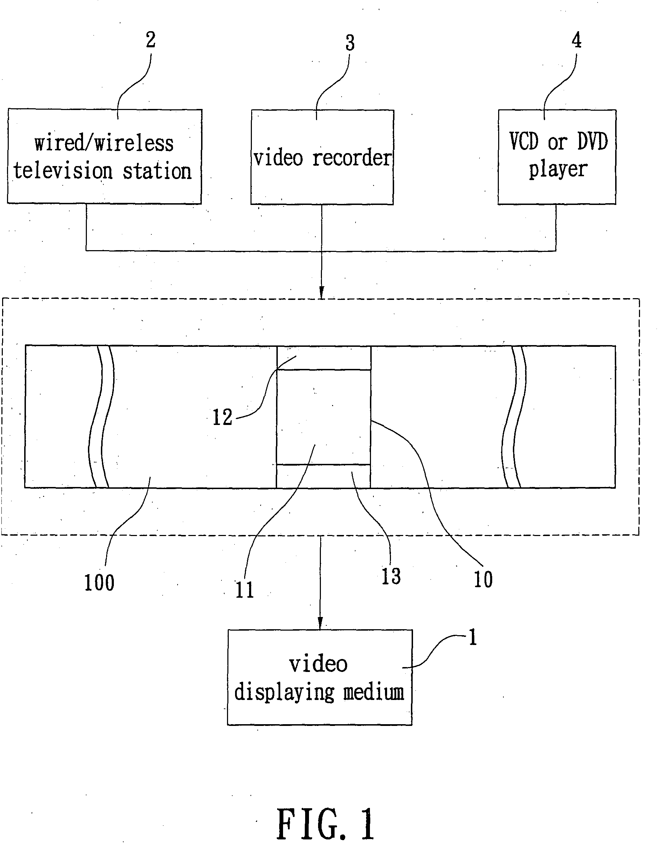

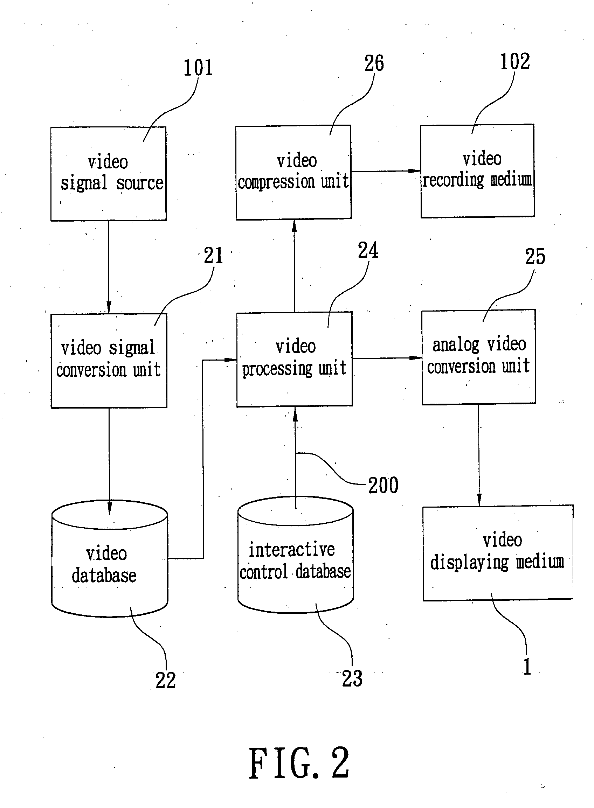

Fig. 1 is an application block diagram of adding interactive control data into a video signal of the present invention. A video signal 100 received by a common video displaying medium 1 (e.g., a television) is an analog signal (e.g., a video signal transmitted by a wired/wireless television station). In order to display contents on a common video displaying medium 1, the video signal 100 of a common video displaying medium (e.g., a wired/wireless television station 2, a video recorders 3, or a VCD or DVD player) is also an analog signal. The above video signal 100 includes 25 or 30 image frames per second. Each image frame can be viewed as an image scan frame 10. In addition to an image display area 11, the image scan frame 10 also has regions exceeding the image display area on the video displaying medium 1 (e.g., the first 8 image scan lines (front block) 12 of each image scan frame 10 or the last 8 image scan lines (rear block) 13 of each image scan frame 10). The present invention makes use of the front and rear blocks 12 and 13 exceeding the image display area 10 to store interactive control data 200, hence not affecting the display of the video signal 100 on the video displaying medium 1. Fig. 2 is a system block diagram of adding interactive control data into a video signal of the present invention. The control device of a video signal combined with interactive control data of the present invention adds a plurality of sets of interactive control data into the common video signal 100. The control device comprises mainly a video signal conversion unit 21, a video database 22, an interactive control database 23, a video processing unit 24, an analog video conversion unit 25 and a video compression unit 26. The video signal conversion unit 21 is connected to a video signal source 101. The video signal source 101 can be a video playing medium like a wired/wireless television station 2, a video recorder 3 or a VCD or DVD player 4.

The video signal conversion unit 21 is mainly used to convert an analog video signal inputted by the video signal source 101 into a digital video signal and then transmit the digital video signal to the video database 22. If the video signal inputted by the video signal source 101 is a digital signal, the video signal conversion unit 21 directly transmits the digital video signal to the video database 21. The video database 22 is connected to the video signal conversion unit 21, and is used to store the digital video signal so that the video processing unit 24 can add the interactive control data 200 into the video signal. The interactive control database 23 is used to store a plurality of sets of interactive control data 200. The interactive control data 200 can be planned and organized by professionals according to the video contents. The video processing unit 24 is connected to the video database 22 and the interactive control database 23, and is used to extract and locate the positions where the interactive control: data 200 are to be added into the digital video signal and then add the interactive control data 200 into the front and rear blocks 12 and 13 exceeding the image display area to generate the digital video signal 100 mixed with the interactive control data 200.

The analog video conversion unit 25 is connected to the video processing unit 24, and is used to convert the digital video signal having the interactive control data 200 accomplished by the video processing unit 24 into an analog video signal and then send the analog video signal to a video displaying device 1 (e.g., a television) for displaying the video signal 100.

The video compression unit 26 is connected to the video processing unit 24, and is used to compress the digital video signal having the interactive control data 200 accomplished by the video processing unit 24 according to image compression techniques (e.g., MPEG) and then store the compressed digital video signal into a video recording medium 102 (e.g., a videotape or a VCD or DVD disc).

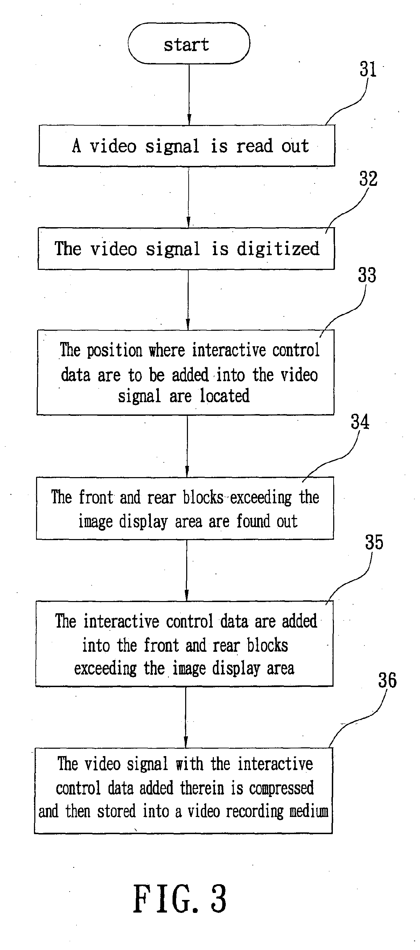

Fig. 3 is a flowchart of adding interactive control data into a video signal of the present invention. In the control method of a video signal combined with interactive control data of the present invention, a video signal is first read out from a video signal source (Step 31). Whether the video signal is a digital signal is determined. If the answer is no, the video signal is digitized (Step 32), and the positions where the interactive control data are to be added into the video signal are then located (Step 33). Next, the front and rear blocks in the video signal exceeding the image display area are found out (Step 34). Finally, the interactive control data are added into the front and rear blocks exceeding the image display area (Step 35). Of course, the video signal with the interactive control data added therein can be converted into an analog video signal to be transmitted to a video displaying medium for displaying, or can be compressed according to image compression techniques (e.g., MPEG) and then stored into a video recording medium (Step 36).

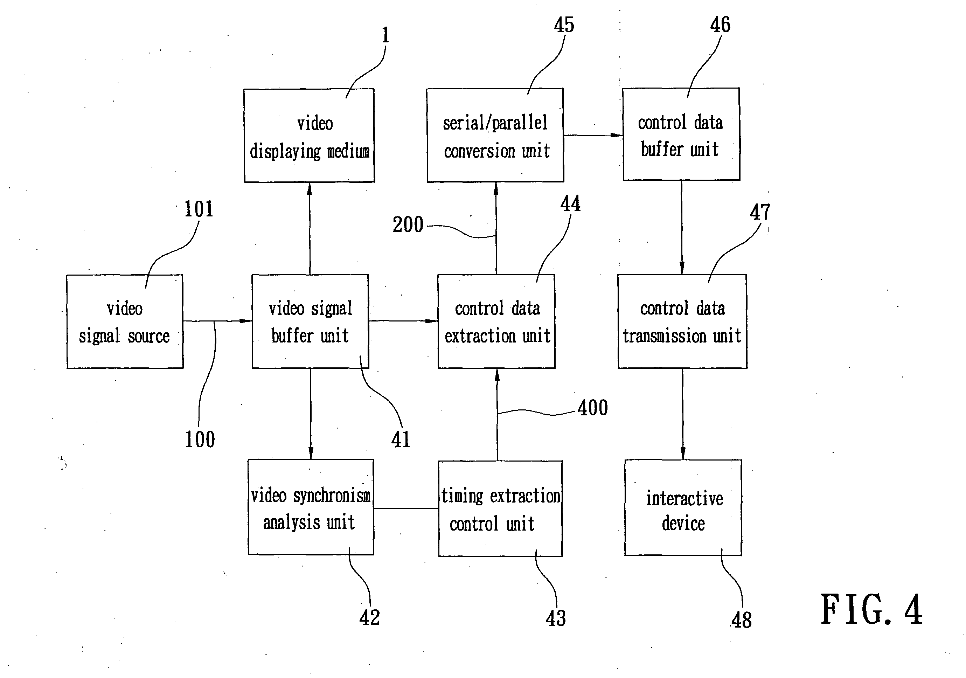

Fig. 4 is a system block diagram of extracting interactive control data from a video signal of the present invention. An interactive control data extraction device of the present invention comprises mainly a video signal buffer unit 41, a video synchronism analysis unit 42, a timing extraction control unit 43, a control data extraction unit 44, a serial/parallel conversion unit 45, a control data buffer unit 46 and a control data transmission unit 47.

The video signal buffer unit 41 is connected to a video signal source 101, and is mainly used for input impedance matching of the video signal 100 to accept the input of the video signal 100 and then drive the video synchronism analysis unit 42, the control data extraction unit 44 and so on. The video signal source 101 can similarly be a video playing medium. The video signal buffer unit 41 can also be connected to a video displaying medium 1 to directly display the video signal 100.

The video synchronism analysis unit 42 is connected to the video signal buffer unit 41, and is used to analyze the synchronous signals and the timing signals in the video signal 100. The synchronous signals analyzed by the video synchronism analysis unit 42 include synchronous signals of frames in the video signal 100 and synchronous signals of image scan lines in each frame.

The timing extraction control unit 43 is connected to the video synchronism analysis unit 42, and is used to calculate the analyzed synchronous signals in the video synchronism analysis unit 42 to obtain the positions and timing of the interactive control data 200 and generate a corresponding extraction control signal 400 to instruct the control data extraction unit 44 to extract the interactive control data 200 in the video signal 100.

The control data extraction unit 44 is connected to the video signal buffer unit 41 and the timing extraction control unit 43, and is used to extract the interactive control data 200 in the video signal 100 according to the extraction control signal 400 and then convert them into digital signals.

The serial/parallel conversion unit 45 is connected between the control data extraction unit 44 and the control data buffer unit 46, and is used to convert the interactive control data 200 from a serial bit stream into a parallel data stream for facilitating reception, processing and transmission using the control data buffer unit 46 and the control data transmission unit 47 of lower speed and price.

The control data buffer unit 46 is connected to the serial/parallel conversion unit 45 or is directly connected to the control data extraction unit 44, and is used to temporarily store the extracted interactive control data hidden at specific positions in non-display area in the video signal 100 for processing and transmission by the control data transmission unit 47.

The control data transmission unit 47 is connected to the control data buffer unit 46, and is used to verify and encode the interactive control data 200 and then transfer the interactive control data 200 to an interactive device 48 one by one in wired or wireless way to induce interactive responses corresponding to the frame displayed on the video displaying medium 1.

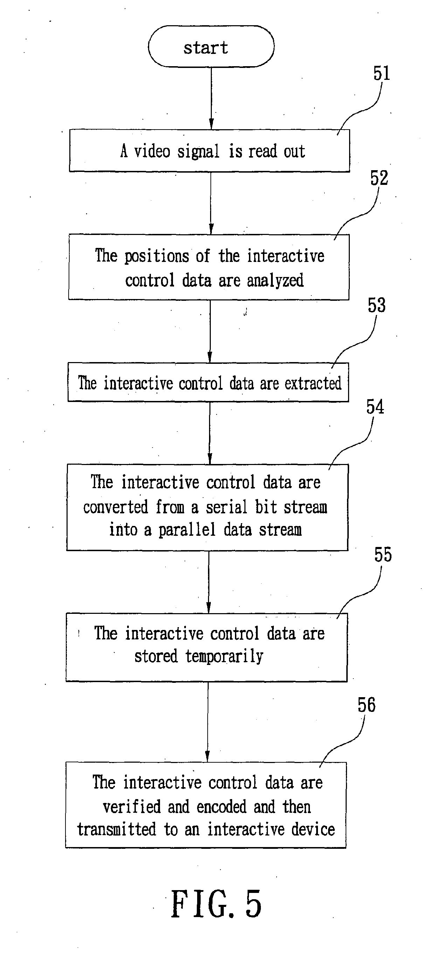

Fig. 5 is a flowchart of extracting interactive control data from a video signal of the present invention. In an interactive control data extraction method of the present invention, a video signal having interactive control data is first read out from a video signal source (Step 51). The video signal can be directly outputted to a video displaying medium. Next, the positions of interactive control data in the front and rear blocks in the video signal exceeding the image display area are analyzed (Step 52). The interactive control data are then extracted (Step 53). The interactive control data are then converted from a serial bit stream into a parallel data stream (Step 54) and then temporarily stored (Step 55). Finally, the interactive control data are verified and encoded and then transmitted to an interactive device to induce corresponding interactive responses (Step 56).

Although the present invention has been described with reference to the preferred embodiment thereof, it will be understood that the invention is not limited to the details thereof. Various substitutions and modifications have been suggested in the foregoing description, and other will occur to those of ordinary skill in the art. Therefore, all such substitutions and modifications are intended to be embraced within the scope of the invention as defined in the appended claims.

## Claims

1. A control method of a video signal combined with interactive control data being used to combine a plurality of sets of interactive control data in said video signal, said plurality of sets of interactive control data being planned and organized in advance according to video contents, said control method at least comprising the steps of:
(a) reading out said video signal from a video signal source;
(b)locating the positions where said interactive control data are to be added into said video signal;
(c) finding out a front block and a rear block in said video signal exceeding the image display area; and
(d)adding said interactive control data into said front and rear blocks exceeding the image display area.

2. The control method of a video signal combined with interactive control data as claimed in claim 1, wherein said video signal source in said Step (a) is a video playing medium.

3. The control method of a video signal combined with interactive control data as claimed in claim 1 further comprising the following steps after said Step (a):
determining whether said video signal is a digital signal; and
digitizing said video signal if the answer is no.

4. The control method of a video signal combined with interactive control data as claimed in claim 1, wherein the image display area means a frame in said video signal, said front block means a plurality of image scan lines in front of each frame, and said rear block means a plurality of image scan lines behind each frame in said Steps (c) and (d).

5. The control method of a video signal combined with interactive control data as claimed in claim 1 further comprising the following step after said Step (d):
converting said video signal combined with said interactive control data into an analog video signal and then transmitting said analog video signal to a video displaying medium.

6. The method of a video signal combined with interactive control data as claimed in claim 1 further comprising the following step after said Step (d):
compressing said video signal according to image compression techniques like MPEG and then storing said compressed video signal into a video recording medium.

7. A control device of a video signal combined with interactive control data being used to combine a plurality of sets of interactive control data in said video signal, said control device at least comprising:
a video signal conversion unit connected to a video signal source and used to convert an analog video signal inputted by said video signal source into a digital video signal;
a video database connected to the video signal conversion unit and used to store said digital video signal;
an interactive control database used to store a plurality of sets of interactive control data, which are planned and organized in advance according to video contents; and
a video processing unit connected to said video database and said interactive control database and used to extract and locate the positions where said interactive control data are to be added into said digital video signal and then add said interactive control data into a front block and a rear block exceeding the image display area to generate a video signal mixed with said interactive control data.

8. The control device of a video signal combined with interactive control data as claimed in claim 7, wherein said video signal source connected to said video signal conversion unit is a video playing medium.

9. The control device of a video signal combined with interactive control data as claimed in claim 7, wherein said video signal is directly transmitted to said video database if said video signal inputted by said video signal source is a digital signal.

10. The control device of a video signal combined with interactive control data as claimed in claim 7 further comprising an analog video conversion unit, which is connected to said video processing unit, and is used to convert said video signal having said interactive control data accomplished by said video processing unit into an analog video signal and then send said analog video signal to a video displaying device.

11. The control device of a video signal combined with interactive control data as claimed in claim 7 further comprising a video compression unit, which is connected to said video processing unit, and is used to compress said video signal having said interactive control data accomplished by said video processing unit according to image compression techniques like MPEG and then store said compressed video signal into a video recording medium.

12. An extraction method of a video signal combined with interactive control data being used to extract a plurality of interactive control data in said video signal, said extraction method at least comprising the steps of:
(a) reading out a video signal having interactive control data from a video signal source;
(b) analyzing the locations of interactive control data in a front block and a rear block in said video signal exceeding the image display area;
(c) extracting said interactive control data; and
(d) transmitting said interactive control data to an interactive device to induce corresponding interactive responses.

13. The extraction method of a video signal combined with interactive control data as claimed in claim 12, wherein said video signal source in said Step (a) is a video playing medium.

14. The extraction method of a video signal combined with interactive control data as claimed in claim 12 further comprising the following step after said Step (a):
directly outputting said video signal to a video displaying medium.

15. The extraction method of a video signal combined with interactive control data as claimed in claim 12, wherein the image display area means a frame in said video signal, said front block means a plurality of image scan lines in front of each frame, and said rear block means a plurality of image scan lines behind each frame in said Step (b).

16. The extraction method of a video signal combined with interactive control data as claimed in claim 12 further comprising the following steps after said Step (c):
converting said interactive control data from a serial bit stream into a parallel data stream; and
temporarily storing said parallel data stream.

17. The extraction method of a video signal combined with interactive control data as claimed in claim 12 further comprising the following step before said Step (d):
verifying and encoding said interactive control data to enhance the correctness of said interactive control data in storage and transmission.

18. An extraction device of a video signal combined with interactive control data being used to extract a plurality of sets of interactive control data from said video signal, said device at least comprising:
a video signal buffer unit connected to a video signal source and used for input impedance matching of said video signal;
a video synchronism analysis unit connected to said video signal buffer unit and used to analyze a plurality of synchronous signals and timing signals in the video signal;
a timing extraction control unit connected to said video synchronism analysis unit and used to calculate said synchronous signals analyzed by said video synchronism analysis unit to obtain the positions and timing of said interactive control data and generate an extraction control signal; and
a control data extraction unit connected to said video signal buffer unit and said timing extraction control unit and used to extract said interactive control data in said video signal according to said extraction control signal.

19. The extraction device of a video signal combined with interactive control data as claimed in claim 18, wherein said video signal source connected to said video signal buffer unit is a video playing medium.

20. The extraction device of a video signal combined with interactive control data as claimed in claim 18, wherein said video signal buffer unit is connected to a video displaying medium to directly output said video signal for display.

21. The extraction device of a video signal combined with interactive control data as claimed in claim 18, wherein said synchronous signals analyzed by said video synchronism analysis unit include synchronous signals of frames in said video signal and synchronous signals of image scan lines in each frame.

22. The extraction device of a video signal combined with interactive control data as claimed in claim 18 further comprising:
a control data buffer unit connected to said control data extraction unit and used to temporarily store said interactive control data; and
a control data transmission unit connected to said control data buffer unit and used to verify and encode said interactive control data and then transfer said interactive control data to an interactive device one by one to induce corresponding interactive responses.

23. The extraction device of a video signal combined with interactive control data as claimed in claim 22 further comprising a serial/parallel conversion unit connected between said control data extraction unit and said control data buffer unit and used to convert said interactive control data from a serial bit stream into a parallel data stream for facilitating temporary storage of said interactive control data in said control data buffer unit.
